# EUROPÄISCHE PATENTSCHRIFT

(11) **EP 1 480 495 B1**
(45) Veröffentlichungstag und Bekanntmachung des Hinweises auf die Patenterteilung: **15.03.2017**
(21) Anmeldenummer: 04009348.6
(22) Anmeldetag: 20.04.2004
(51) Int. Cl.: H05B 37/02

(54) **Lichtanlage und Verfahren zur Herstellung derselben**
Lighting equipment and method for installing it
Installation d'éclairage et méthode pour sa mise en service

(30) Priorität: 22.05.2003 DE 10323690
(43) Veröffentlichungstag der Anmeldung: 24.11.2004
(73) Patentinhaber: OSRAM GmbH, 80807 München (DE)
(72) Erfinder: Huber, Andreas, 83301 Traunreut (DE)

(56) Entgegenhaltungen:
- EP-A- 1 069 690
- US-A- 4 975 629
- US-A- 5 866 992
- US-A1- 2002 014 867
- US-A1- 2002 065 583
- US-A1- 2002 084 890
- US-A1- 2002 145 394

## Beschreibung

### Technisches Gebiet

Diese Erfindung bezieht sich auf ein Lichtanlage mit Lampen zur Lichterzeugung, die über angeschlossene Vorschaltgeräte betrieben werden können, wobei die Vorschaltgeräte durch ein oder mehrere Steuergerät/e steuerbar sind.

### Stand der Technik

Lichtanlagen mit einer Mehrzahl von Lampen sind allgemein bekannt und finden insbesondere in Tagungsräumen, Veranstaltungsräumen, Hotels, Restaurants und überall dort Anwendung, wo größere Flächen beleuchtet werden müssen und dabei die Beleuchtung zentral gesteuert werden soll. In vielen Fällen gehen die Möglichkeiten der zentralen Steuerung durch ein oder auch mehrere Steuergerät/e über eine einfache Ein- und Ausschaltfunktion hinaus, beispielsweise können die betroffenen Lampen auch gruppenweise geschaltet oder gedimmt werden. Häufig treten dabei an zumindest einem Teil der Lampen Vorschaltgeräte zum Betrieb der Lampen auf, etwa elektronische Vorschaltgerät für Entladungslampen wie Leuchtstoffröhren oder E-nergiesparlampen, Transformatoren für Halogenglühlampen u. Ä.. Im Bereich der Effektbeleuchtung können die Vorschaltgeräte weitergehende Funktionen ausführen, die jedoch auch von dem Steuergerät übernommen werden können.

Früher mussten schaltungstechnische Differenzierungsmöglichkeiten eines Steuergeräts bzgl. der von ihm angesteuerten Lampen, also beispielsweise die Ansteuerbarkeit in Gruppen, durch eine entsprechend aufwendige Verkabelung realisiert werden. Unterdessen ist es jedoch auch zunehmend vorgekommen, eine adressbehaftete Steuerung zu verwenden, bei der also die Vorschaltgeräte der Lampen über ihnen zugeordnete Adressen identifiziert bzw. angesteuert werden können.

Bei der Installation einer solchen Beleuchtungsanlage muss eine Zuordnung zwischen den Positionen der einzelnen Lampen bzw. von einem gemeinsamen Betriebsgerät betriebenen Lampengruppen und ihrer Adresse vorgenommen werden. Anschaulich gesprochen muss das Steuergerät also wissen, welche Adresse anzusteuern ist, wenn eine bestimmte Lampe oder Lampengruppe in ihrer Funktion beeinflusst werden soll.

### Darstellung der Erfindung

Der Erfindung liegt das technische Problem zu Grunde, ein verbessertes Verfahren zum Herstellen einer adressbehaftet gesteuerten Lichtanlage mit Lampen, Vorschaltgeräten und zumindest einem Steuergerät anzugeben.

Die Erfindung zeichnet sich dadurch aus, dass die Vorschaltgeräte vor der Installation in der Lichtanlage mit für die jeweiligen Vorschaltgeräte individuellen, von außen signaltechnisch ansprechbaren Codes versehen sind, diese Codes während der Installation der Lichtanlage ausgelesen und dem Steuergerät eingegeben werden, so dass sie durch das Steuergerät den Installationspositionen der jeweiligen Vorschaltgeräte zuzuordnen sind, das Steuergerät den jeweiligen Vorschaltgeräten jeweilige Ansteueradressen zur Ansteuerung zuweist und das Steuergerät die Vorschaltgeräte unter Benutzung der Ansteueradressen steuert.

Daneben bezieht sich die Erfindung aber auch auf eine entsprechend hergestellte und in Betrieb genommene Lichtanlage sowie schließlich auf ein Herstellungsverfahren für ein Vorschaltgerät, bei dem das Vorschaltgerät in einer an die Erfindung angepassten Weise mit einem von außen signaltechnisch ansprechbaren Code versehen wird.

Bevorzugte Ausgestaltungen der Erfindung sind in den abhängigen Ansprüchen angegeben. Die Einzelmerkmale beziehen sich dabei sowohl auf die Vorrichtungskategorie als auch die Verfahrenskategorie der Erfindung.

Der wesentliche Punkt der Erfindung liegt in der individuellen Codierung von Vorschaltgeräten, um sie beim Installieren der Lichtanlage voneinander unterscheidbar zu machen. Konventionellerweise sind die Vorschaltgeräte - ob nun für sich oder bereits als Modul mit Lampe ausgeführt - untereinander im Prinzip ununterscheidbar. Daher muss der Installateur beispielsweise bei der Zuordnung einer Vorschaltgerätadresse in dem Steuergerät über das Steuergerät das entsprechende Vorschaltgerät ansteuern und tatsächlich prüfen, welche Lampe oder Lampen eingeschaltet worden ist/sind. Erst darüber kann die Zuordnung zwischen Adresse und Position in der Lichtanlage erfolgen. Dies kann bei größeren Lichtanlagen oder bei über mehrere Räume oder gar Gebäude verteilten Lichtanlagen außerordentlich mühsam sein.

Demgegenüber sieht die Erfindung vor, dass während der Installation der Lichtanlage, d. h. während der Montage des Vorschaltgeräts, der Code ausgelesen, also in irgendeiner Weise erfasst wird, um ihn zusammen mit der Installationsposition dem Steuergerät eingeben zu können. Beispielsweise kann der Installateur bei der Montage des Vorschaltgeräts einen darauf geschriebenen Code abschreiben und einen entsprechend mit Codes bezifferten Installationsplan erstellen, der während der Programmierung des Steuergeräts verwendet werden kann. Er kann jedoch auch den Code in eine Datei abtippen oder beispielsweise mit einem Barcodeleser auslesen oder in anderer Weise datentechnisch oder elektrisch erfassen. Wenn nun das Steuergerät programmiert wird, existiert bereits eine Zuordnung zwischen den Codes der Vorschaltgeräte und ihren Positionen in der Lichtanlage, weil der Installateur diese Zuordnung bereits bei der Montage der Vorschaltgeräte, also zu diesem Zeitpunkt in Kenntnis der Positionen der Lichtanlage, vorgenommen hat.

Das Steuergerät muss nunmehr den jeweiligen Vorschaltgeräten lediglich Ansteueradressen zuweisen, welche auch die Codes selbst sein könnten und künftig die Vorschaltgeräte mit diesen Ansteueradressen adressieren und steuern.

Vorstehend wurde von Vorschaltgeräten und nicht von Lampen gesprochen, obwohl in der Lichtanlage letztlich der Lampenbetrieb gesteuert werden soll. Allerdings sind reine Lampen ohne Vorschaltgerät per se nicht adressierbar. Es wird davon ausgegangen, dass der Begriff Vorschaltgerät hier die sozusagen unmittelbar den Lampen zugeordneten Betriebsgeräte meint, also solche Geräte, die lediglich über elektrische Leitungen oder andere einfache elektrische Einrichtungen ohne eigene datentechnische Funktion und Bedeutung, an die Lampen angeschlossen sind. In diesem Sinn ist also von direkt an die Lampen angeschlossenen Vorschaltgeräten die Rede.

Dem steht nicht im Wege, dass auch indirekt an die Lampen angeschlossene Geräte, also solche, die ihrerseits wiederum über Vorschaltgeräte mit den Lampen verbunden sind, adressiert und in der erfindungsgemäßen Weise codiert werden können.

Die Verbindungen zwischen dem Steuergerät und den Vorschaltgeräten können im Übrigen leitungslos sein, also etwa auf Funkstrecken beruhen. Ferner ist der Begriff Lichtanlage hier sehr allgemein zu verstehen und beschränkt sich nicht auf Beleuchtungen im klassischen Sinn, also die eingangs erwähnten Beispiele der Raum- oder Außenbeleuchtung mit konventionellen Lampen. Vielmehr können z. B. auch LED-Anwendungen erfindungsgemäß installiert werden, sofern entsprechende Steuergeräte und Vorschaltgeräte vorliegen. Der Begriff "von außen signaltechnisch ansprechbar" ist ebenfalls allgemein zu verstehen und kann zum einen bedeuten, dass die Codes in den Vorschaltgeräten von außen ausgelesen werden können, so dass das Steuergerät oder ein Servicegerät abfragen kann, welchen Code ein Vorschaltgerät hat. "Ansprechbar" kann aber auch bedeuten, dass die Vorschaltgeräte codespezifisch selektierbar sind, sich also das entsprechende Vorschaltgerät "angesprochen fühlt", wenn ein Ansteuerbefehl mit dem zutreffenden Code empfangen wird.

Das erfindungsgemäße Verfahren hat somit den Vorteil einer klaren und vergleichsweise wenig arbeitsaufwendigen Installation und Adresszuordnung. Diese Vorteile gelten natürlich auch für die entsprechend hergestellte und in Betrieb genommenen Lichtanlage. Durch ihre Anwendbarkeit in dem geschilderten Herstellungsverfahren übertragen sich diese Vorteile ferner auf die passenden Vorschaltgeräte und damit auf ein Herstellungsverfahren für ein Vorschaltgerät bei dem ein in der oben stehenden Weise in einer adressbehaftet gesteuerte Lichtanlage integrierbares Vorschaltgerät mit einem von außen signaltechnisch ansprechbaren Code im oben stehenden Sinn versehen wird.

Eine bevorzugte Ausführungsform der Erfindung sieht vor, dass die Codes der Vorschaltgeräte über Leitungen an den Vorschaltgeräten von außen ansprechbar sind, welche Leitungen die Vorschaltgeräte an dem Steuergerät anschließen. Diese Leitungen können neben klassischen elektrischen Leitungen allerdings auch optische Leitungen, etwa Glasfaserleitungen, sein.

Die in den Vorschaltgeräten enthaltenen Codes können dort vorzugsweise in einem Halbleiterspeicher abgelegt sein. Ferner können sie erfindungsgemäß vorzugsweise optisch ablesbar auf dem Vorschaltgerät angebracht sein, also etwa in der beschriebenen Weise als Barcodeaufdruck oder -aufkleber oder als alphanumerische Beschriftung.

Ein besonders bevorzugter Anwendungsfall der Erfindung sieht Entladungslampen und/oder LEDs als Lampen vor, wobei natürlich daneben auch andere Lampentypen auftreten können. Entladungslampen und LEDs bzw. LED-Module sind innerhalb von Lichtanlagen i. d. R. nicht ohne Vorschaltgeräte betreibbar. Allerdings können auch Relais oder Dimmer für Glühlampen Vorschaltgeräte im Sinne der Erfindung sein.

Komplexere Steuermöglichkeiten bei Lichtanlagen sind vor allem im Bereich der Innenraumbeleuchtung gefragt, so dass sich die Erfindung bevorzugt auf diesen Bereich richtet. Beispiele sind Konferenz- und Veranstaltungsräume, Theater und dgl..

Die erfindungsgemäße Lichtanlage kann ihrerseits Teil eines größeren Systems sein, das Steuergerät kann also seinerseits an ein Gebäudesteuersystem im Sinn einer allgemeineren Haustechniksteuerung angeschlossen und durch dieses System gesteuert sein. Die mit der erwähnten Adressierung verbundenen Funktionsbefehle können dabei natürlich letztlich durch das Gebäudesteuersystem erzeugt und durch das Lichtanlagensteuergerät lediglich in die Lichtanlage eingegeben werden.

Die Erfindung ermöglicht es auch in besonders einfacher Weise, eine bestehende Lichtanlage aufzurüsten. Das erfindungsgemäße Verfahren umfasst also auch den Fall, dass eine bestehende Lichtanlage durch Hinzufügen zumindest eines Vorschaltgeräts erweitert und damit in der erweiterten Form hergestellt wird. Dabei ist sowohl der Fall denkbar, dass die vorherige kleinere Lichtanlage bereits erfindungsgemäß konzipiert war, als auch der Fall, dass durch entsprechende Nachrüstung oder Ersetzung des Steuergeräts eine konventionelle Lichtanlage mit dem erfindungsgemäßen Verfahren kompatibel gemacht wird. Die konventionelle kleinere Lichtanlage verfügt dann ja bereits über eine Adresszuordnung, so dass die Vorteile der Erfindung für die vorliegende oder auch zukünftige Erweiterungsstufen genutzt werden können.

Eine einfache und gerade im Fall von späteren Fehlersuchen, Reklamationen oder von statistischer Datenerfassung vorteilhafte Art der Codierung der Vorschaltgeräte besteht darin, dass der Code Datum und/oder Ort der Fertigung des Vorschaltgeräts und/oder Angaben über den Vorschaltgerätetyp, den anschließbaren Lampentyp oder die anschließbare Lampenanzahl enthält oder auch nur ausschließlich aus diesen Angaben besteht. Auch beim späteren Nachrüsten beispielsweise von Softwareupdates in Mikrocontrollersteuerungen oder bei der Suche von auszutauschenden oder zu überprüfenden Anlagenteilen können in dieser Weise die betroffenen Vorschaltgeräte besonders einfach selektiert werden.

Bei der vorliegenden Erfindung geht es bei einem weiteren Aspekt spezieller um eine Lichtanlage, in der zumindest eine Gasentladungslampe mit vorheizbaren Elektroden enthalten ist. Bei vielen Entladungslampentypen sind Elektroden vorheizbar, um die Zündbedingungen zu verbessern und die Lebensdauer der Entladungslampe zu verlängern. Ein Einschalten einer solchen Entladungslampe geschieht über einen Vorheizvorgang und darauf folgenden Zündvorgang in der Lampe.

Die Erfindung sieht diesbezüglich vor, durch das Steuergerät an das Vorschaltgerät einen Bereitschaftsbefehl zu schicken, auf den hin das Vorschaltgerät die Entladungslampe in der Weise betreibt, dass es die Elektroden bei nicht brennender Entladungslampe weiterheizt, so dass das Steuergerät durch einen Einschaltbefehl die Entladungslampe, deren Elektroden geheizt sind, ohne Verzögerung durch ein Vorheizzeit wieder zünden kann.

Bei manchen Anwendungen hat es sich herausgestellt, dass die durch die Vorheizzeit bedingte Verzögerung zwischen einem Einschaltbefehl und der tatsächlichen Lichterzeugung nachteilig sein kann. Dies betrifft insbesondere den Bereich der Bühnen- und Effektbeleuchtung, kann jedoch auch in anderen Zusammenhängen vor allem bei komplexeren zeitlichen Steuerungsschemen von Interesse sein:

Die Erfindung sieht dementsprechend einen Bereitschaftszustand des Vorschaltgeräts und folglich der Entladungslampe vor, in dem die Elektroden weitergeheizt bleiben. Das Weiterheizen erfolgt zumindest in dem Umfang, dass ein neuer Start ohne Schädigung der Lampe und quasi ohne Zeitverzögerung möglich ist. Dieser Bereitschaftszustand wird dadurch hervorgerufen, dass ein hierzu vorgesehener Bereitschaftsbefehl von dem Steuergerät an das Vorschaltgerät geschickt wird. Der Bereitschaftsbefehl kann zum einen zur Folge haben, dass das Vorschaltgerät einen nachfolgenden Ausschaltbefehl nicht im Sinne eines vollständigen Ausschaltens sondern im Sinne eines Übergangs in den Bereitschaftszustand umsetzt, also die Elektroden bei nicht brennender Entladungslampe weiterheizt. Zum anderen kann der Bereitschaftsbefehl aber auch bei ausgeschalteter Lampe empfangen werden und ein Vorheizen bzw. Heizen der Elektroden bis zum nächsten Einschaltbefehl mit entsprechendem Sofortstart zur Folge haben. Zum Dritten, und diese Variante ist bei der Erfindung bevorzugt, ist der Bereitschaftsbefehl gleichzeitig ein Ausschaltbefehl, wird also an ein Vorschaltgerät einer brennenden Entladungslampe geschickt, worauf hin die Entladungslampe erlischt, jedoch die Elektroden weitergeheizt bleiben.

Die Erfindung hat also insgesamt den Vorteil, durch Einführen eines weiteren Befehls und eines entsprechenden Bereitschaftszustands bei Bedarf einen quasi instantanen Sofortstart von Entladungslampen in Lichtanlagen zu ermöglichen.

Ferner kann vorgesehen sein, dass der auf den Bereitschaftsbefehl folgende Bereitschaftszustand bzw. Elektrodenheizvorgang zeitlich begrenzt ist und wieder abgeschaltet wird, wenn nach einer vorgegebenen Zeit kein Einschaltbefehl oder auch erneuernder weiterer Bereitschaftsbefehl eingegangen ist. Damit kann verhindert werden, dass der Bereitschaftzustand im Fall einer Fehlsteuerung oder eines unerwarteten Betriebsendes der Lichtanlage unnötig oder sogar unbegrenzt lang andauert.

Diese zeitliche Begrenzung erfolgt vorzugsweise durch das Vorschaltgerät und nicht durch das Steuergerät. In diesem Zusammenhang kann ferner vorgesehen sein, dass bei einem Einschaltbefehl bei dem Vorschaltgerät abgefragt wird, ob der Bereitschaftszustand, also der Elektrodenheizvorgang, noch andauert. Dann kann abhängig von dem Ergebnis der Abfrage vor einem Neustart ein Vorheizvorgang eingeschoben werden oder nicht. Auch diese Abfrage erfolgt vorzugsweise durch das Vorschaltgerät selbst, es prüft also den Zustand der von ihm betriebenen Lampe bzw. den eigenen Betriebszustand.

Ferner kann bei der Erfindung vorgesehen sein, dass der Bereitschaftszustand auch vor Ablauf der zeitlichen Begrenzung oder, falls dieses Merkmal nicht vorgesehen ist, überhaupt durch einen Bereitschafts-Aus-Befehl beendet werden kann.

Ein erfindungsgemäßes Vorschaltgerät ist entsprechend ausgestaltet, also dazu eingerichtet, auf den erfindungsgemäßen Bereitschaftsbefehl in der geschilderten Weise zu reagieren.

Ein erfindungsgemäßes Steuergerät wiederum ist dazu ausgelegt, einen beschriebenen Bereitschaftsbefehl abschicken zu können, sieht also den einschlägigen zusätzlichen Befehl vor. Ferner weist eine erfindungsgemäße Lichtanlage zumindest ein entsprechendes Vorschaltgerät und zumindest ein entsprechendes Steuergerät auf, um entsprechend dem geschilderten Verfahren arbeiten zu können.

Das Vorschaltgerät bzw. das Steuergerät sollen bei dieser Erfindung vorzugsweise für eine digitale Kommunikation ausgelegt sein, das Vorschaltgerät soll also digital unter Verwendung eines Kommunikationsprotokolls ansteuerbar sein und das Steuergerät für eine digitale Ansteuerung eines Vorschaltgeräts mit einem Kommunikationsprotokoll ausgelegt sein. Insbesondere haben verschiedene Hersteller sich jüngst auf ein gemeinsames Kommunikationsprotokoll unter der Bezeichnung "digital addressable lighting interface" (= "DALI") geeinigt.

Die Erfindung sieht nach einem weiteren Aspekt eine digitale Ansteuerung des Vorschaltgeräts mit einem zweiten zusätzlichen Kommunikationsprotokoll vor.

Dieser Zusatzaspekt der Erfindung besteht also darin, dass es besondere Vorteile bietet, die erwähnten Geräte, wobei der Begriff Gerät im Folgenden sowohl das Steuergerät als auch das Vorschaltgerät gemäß der Erfindung meint, auf zwei verschiedene Kommunikationsprotokolle hin auszulegen. Neben einem vorgegebenen Protokoll, etwa dem erwähnten DALI-Protokoll, kann ein erfindungsgemäßes Gerät dann also über ein zusätzliches Protokoll kommunizieren und entsprechend weitere Informationen austauschen.

Neben der schieren Erweiterung der Kommunikationsmöglichkeiten über die durch das erste Kommunikationsprotokoll gegebene Steigerung der technischen Leistungsfähigkeit hinaus, hat die Erfindung dabei den erheblichen Vorteil, dass diese Leistungssteigerung ohne ein Abweichen von einem vorgegebenen und in der Praxis womöglich stark verbreiteten bzw. durch eine gewisse Standardisierung festgelegten Protokoll erzielt werden kann. Die erfindungsgemäßen Geräte bleiben nämlich weiterhin mit dem ersten Protokoll kompatibel. Ein zusätzlicher Aspekt kann darin liegen, dass das zweite Kommunikationsprotokoll im Gegensatz zu einem nach Herstellerübereinkunft oder in anderer Weise standardisierten ersten Protokoll herstellerspezifisch oder im Einzelfall sogar anwendungsspezifisch oder kundenspezifisch festgelegt werden kann und möglicherweise auch mit geringerem Aufwand oder kürzeren Zeitabständen geändert und insbesondere erweitert werden kann.

Dabei bleibt es jedoch bei einer uneingeschränkten Funktionsfähigkeit der Kommunikation über das erste Protokoll, also insbesondere bei einer einwandfreien Erstellbarkeit bzw. Verständlichkeit der zugehörigen Befehle. Statt der technisch im Grunde einfacheren und direkteren Ersetzung eines abzuwandelnden oder zu erweiternden Protokolls durch ein anderes, geht die Erfindung also den Weg einer "zweigleisigen" Kommunikation zwischen den Geräten.

Vorzugsweise sind die erfindungsgemäßen Geräte natürlich in Kombination vorhanden. Die Erfindung richtet sich also insbesondere auch auf Lichtanlagen, in denen sowohl die Vorschaltgeräte als auch Steuergeräte erfindungsgemäß ausgestaltet sind. Andererseits werden bereits Vorteile erzielt, wenn nur ein einzelnes Gerät der Erfindung entspricht bzw. wenn in einer Lichtanlage nur die Vorschaltgeräte oder Steuergeräte oder ein Teil derselben der Erfindung entsprechen. Zum einen ergibt sich dadurch eine erweiterte Nachrüstbarkeit und Funktionserweiterung durch späteren Anschluss passender erfindungsgemäßer Geräte (Steuergeräte zu vorhandenen Vorschaltgeräten oder umgekehrt). Zum Zweiten lassen sich die einzelnen Geräte durch ein externes, auf das zweite Kommunikationsprotokoll ausgelegte Servicegerät auslesen oder umprogrammieren, ohne dabei durch das erste Protokoll eingeschränkt zu sein.

Ein erfindungsgemäßes Vorschaltgerät ist dabei vorzugsweise so ausgestattet, dass es bei Empfang eines Ansteuersignals selbständig feststellen kann, zu welchem Kommunikationsprotokoll das Ansteuersignal gehört, und sich entsprechend auf eine Auswertung dieses Ansteuersignals einstellen kann. Im Prinzip wäre die Erfindung jedoch auch so ausführbar, dass das Vorschaltgerät durch ein externes Signal oder einen Schalter an dem Vorschaltgerät oder in ähnlicher Weise von dem ersten auf das zweite Kommunikationsprotokoll umgeschaltet werden kann oder umgekehrt.

Ein erfindungsgemäßes Steuergerät wiederum ist vorzugsweise so ausgestattet, dass es Ansteuersignale entsprechend dem ersten Kommunikationsprotokoll und weitere Ansteuersignale entsprechend dem zweiten Kommunikationsprotokoll "zeitgleich" versenden kann. Hierbei meint "zeitgleich", dass das Versenden ohne Umschalten durch Außeneinwirkung erfolgt, also entweder tatsächlich parallel, etwa auf unterschiedlichen Trägerfrequenzen, oder in irgendeiner Weise zeitverschachtelt, also mit Wechsel nach bestimmten Bitzahlen oder bestimmten Befehlszahlen. Insbesondere ist bevorzugt, dass das Steuergerät zeitverschachtelt Ansteuersignale gemäß beiden Kommunikationsprotokollen versendet, wobei sich die Signale ohne fest vorgegebene Alternierungsreihenfolge befehlsweise abwechseln. Das Abwechseln erfolgt dabei bedarfsabhängig. Es werden also beispielsweise Befehle des zweiten Protokolls nach Bedarf zwischen Befehle des ersten Protokolls zwischengeschoben. Dabei kann das bereits erwähnte bevorzugte Vorschaltgerät selbständig eine Zuordnung zu den Protokollen vornehmen.

Eine bevorzugte Möglichkeit der Unterscheidung zwischen den Protokollen besteht darin, dass die entsprechenden Befehlsworte unterschiedliche Wortlängen aufweisen. Vorzugsweise weisen die Befehlsworte jedoch identische Startbits auf, um zunächst eine Synchronisierung oder Triggerung zu ermöglichen. Ferner kann alternativ zu den verschiedenen Wortlängen oder zusätzlich dazu vorgesehen sein, dass sich die Kommunikationsprotokolle in ihren Stoppbits unterscheiden. Bei gleichzeitiger Verwendung der beiden Unterscheidungsmöglichkeiten wird eine erhöhte Erkennungssicherheit gewährleistet.

Ferner sind die erfindungsgemäßen Kommunikationsprotokolle vorzugsweise biphasencodiert. Dies bedeutet, dass die logische 1 und die logische 0 nicht einem elektrischen Niedrigpegel oder Hochpegel oder umgekehrt entsprechen sondern einem vorgegebenen Pegelwechsel. Beispielsweise kann ein aufsteigender Pegelsprung eine logische 0 und ein abfallender Pegelsprung eine logische 1 bedeuten und umgekehrt. Dies hat den Vorteil, dass das Vorliegen eines Bits eindeutig erkannt werden kann. Hierzu wird ergänzend auf die EP 1 069 690 verwiesen.

Eine besondere Nutzanwendung der Erfindung besteht darin, erfindungsgemäße Geräte unter Ausnutzung des zweiten, beispielsweise herstellerspezifischen Kommunikationsprotokolls im Hinblick auf Defektanalyse oder Betriebsvorgeschichte auslesen und im Hinblick auf Wartung bzw. Update umprogrammieren zu können. Insbesondere kann der Inhalt eines elektronischen Speichers einer Mikrocontrollersteuerung beispielsweise auf Betriebsstundenzahl oder Fehlermeldungen ausgelesen werden oder mit einer aktuelleren Betriebssoftware oder einer an einen neu eingesetzten Lampentyp angepassten Betriebssoftware beschrieben werden. Schließlich bieten sich für das zusätzliche Kommunikationsprotokoll vor allem die umfangreich beschriebenen Bereitschaftsbefehle und Bereitschafts-Aus-Befehle an, die etwa im Rahmen des DALI-Potokolls nicht vorgesehen sind.

### Kurze Beschreibung der Zeichnungen

- Fig. 1: zeigt ein schematisches Blockschaltbilds eines erfindungsgemäßen Vorschaltgeräts.
- Fig. 2: zeigt schematisch eine erfindungsgemäße Lichtanlage.
- Fig. 3: zeigt ein zweites Ausführungsbeispiel einer erfindungsgemäßen Lichtanlage.
- Fig. 4: zeigt das Vorschaltgerät aus Fig. 1 von außen.
- Fig. 5a - 5c: zeigt schematisch den Wortaufbau von Steuerbefehlen gemäß der Erfindung.
- Fig. 6: zeigt schematische Zeitverlaufsdiagramme zur Erläuterung des erfindungsgemäßen Bereitschaftszustands.

### Bevorzugte Ausführung der Erfindung

Im Folgenden wird die Erfindung anhand eines anschaulichen Ausführungsbeispiels näher erläutert, wobei auf die beiliegenden Figuren Bezug genommen wird. Dabei bezieht sich die Offenbarung, wie auch die vorstehende Beschreibung bereits, sowohl auf den Vorrichtungscharakter als auch auf den Verfahrenscharakter der Erfindung. Die Einzelmerkmale können auch in anderen Kombinationen erfindungswesentlich sein.

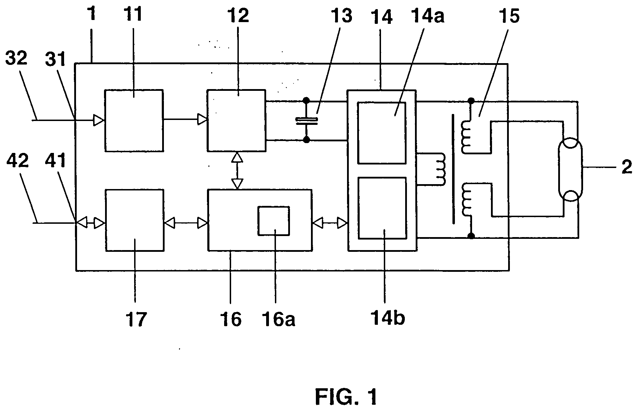

Fig. 1 zeigt ein schematisches Blockschaltbild eines erfindungsgemäßen Vorschaltgeräts für eine Entladungslampe in einer Lichtanlage.

Die mit 2 bezifferte Entladungslampe wird durch das mit 1 bezifferte elektronische Vorschaltgerät gestartet und betrieben und weist insbesondere vorheizbare Elektroden auf. Das elektronische Vorschaltgerät (im Folgenden der Kürze halber EVG) weist einerseits einen Netzanschluss 31 zum Anschließen einer Netzversorgungsleitung 32 und andererseits einen Steueranschluss 41 zum Anschließen einer Steuerleitung 42 auf.

Im Folgenden werden an sich konventionelle Einrichtungen nur kursorisch beschrieben, weil der Fachmann ihren technischen Aufbau ohnehin kennt und sie für das Verständnis der Erfindung nur von untergeordneter Bedeutung sind.

Der Netzanschluss 31 führt über ein Funkschutzfilter 11 und einen Gleichrichter mit Leistungsfaktorkorrekturschaltung (PFC-Schaltung) zu einem Glättungskondensator 13, der einen Wechselrichter 14, etwa mit Halbbrückentopologie, mit Gleichspannungsleistung versorgt. Der Wechselrichter 14 enthält im Wesentlichen die Funktionsblöcke Lampenschaltung 14a und Heizschaltung 14b und ist über einen Transformator 15 mit Abgriffen für das Heizen der Elektroden (wie grafisch angedeutet) an die Lampe 2 angeschlossen.

Andererseits ist der Steueranschluss 41 an eine digitale elektronische Schnittstelle 17 angeschlossen und liefert über diese ein Steuersignal an einen Mikrocontroller 16 mit Speicher 16a. Dieser Mikrocontroller 16 dient zur Steuerung des Wechselrichters, d. h. letztlich zur Steuerung des Lampenbetriebs einschl. Vorheizen, Zündung und Dimmfunktion.

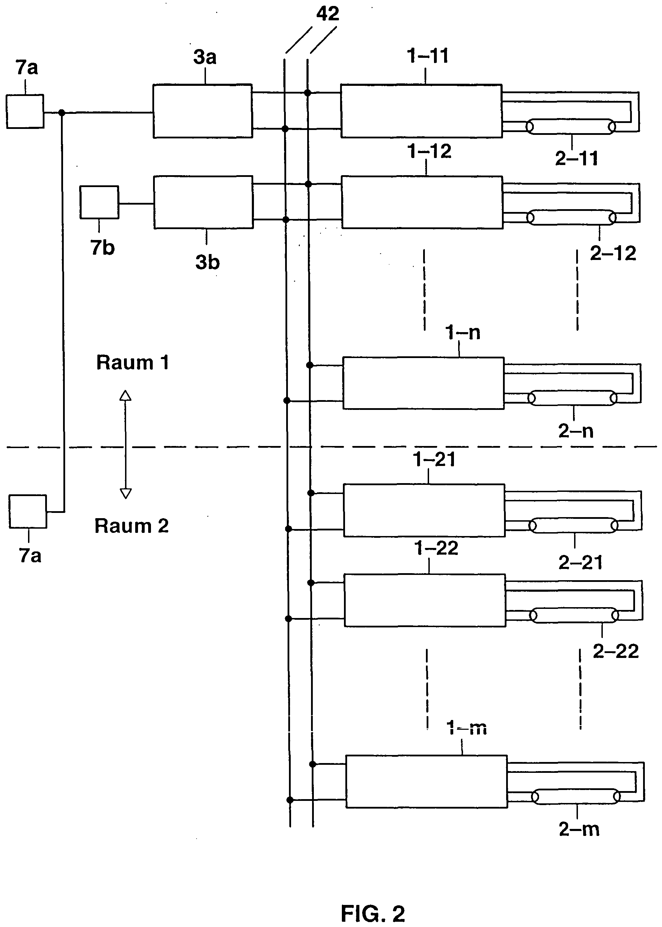

Fig. 2 zeigt wiederum in schematisierter Weise eine erfindungsgemäße Lichtanlage, wobei mit 1-11 bis 1-n und 1-21 bis 1-m EVGs des in Fig. 1 dargestellten Typs und mit 2-11 bis 2-n und 2-21 bis 2-m daran angeschlossene Entladungslampen entsprechend der Lampe 2 aus Fig. 1 bezeichnet sind. Die etwa in der Mitte der Fig. 2 eingezeichnete gestrichelte Horizontale teilt symbolisch einen darüber befindlichen ersten Raum von einem darunter befindlichen zweiten Raum. Ein Teil der EVGs und Lampen befindet sich also in dem ersten und ein anderer Teil in dem zweiten Raum. In der Realität sind natürlich weitere Räume und ggf. auch weitere EVGs und Lampen vorgesehen, so dass man sich Fig. 2 nach unten fortgesetzt denken kann. Im linken Bereich sind mit 7a und 7b Bedienelemente zur Bedienung der Lichtanlage vorgesehen, wobei die Bedienelemente an zwei Steuergeräte 3a und 3b angeschlossen sind. Beide Steuergeräte befinden sich bei diesem Beispiel in dem ersten Raum. Dort befinden sich auch die Bedienelemente 7a und 7b oben links. Jedoch findet sich ein gleichartiges zweites Bedienelement 7a, das mit dem oberen Bedienelement 7a zusammengeschaltet ist und identische Funktionen aufweist, weiterhin auch in dem zweiten Raum. Das Steuergerät 3a erfüllt also Funktionen, die von beiden Räumen aus bedient werden können, während das Steuergerät 3b nur im ersten Raum zugänglich ist.

Die Steuergeräte 3a und 3b sind mit Steuersignalausgängen an zwei Bussignalleitungen 42 angeschlossen, deren Abzweige der in Fig. 1 eingezeichneten Steuerleitung 42 entsprechen. Die Steuersignalleitung 42 ist also zweipolig und als reine Busleitung ausgeführt, weil an ihr beide Steuergeräte 3a und 3b sowie sämtliche EVGs angeschlossen sind. Die jeweilige Netzleistungversorgung 32 der EVGs ist in Fig. 2 nicht eingezeichnet und erfolgt nach für die Erfindung nicht interessierenden Prinzipien lokal. Damit ist klar, dass über die Bedienelemente und Steuergeräte Funktionen der einzelnen Lampen bzw. EVGs rein signaltechnisch über eine Busleitung 42 steuerbar sind, wobei auf die Steuersignale im Einzelnen noch näher eingegangen wird.

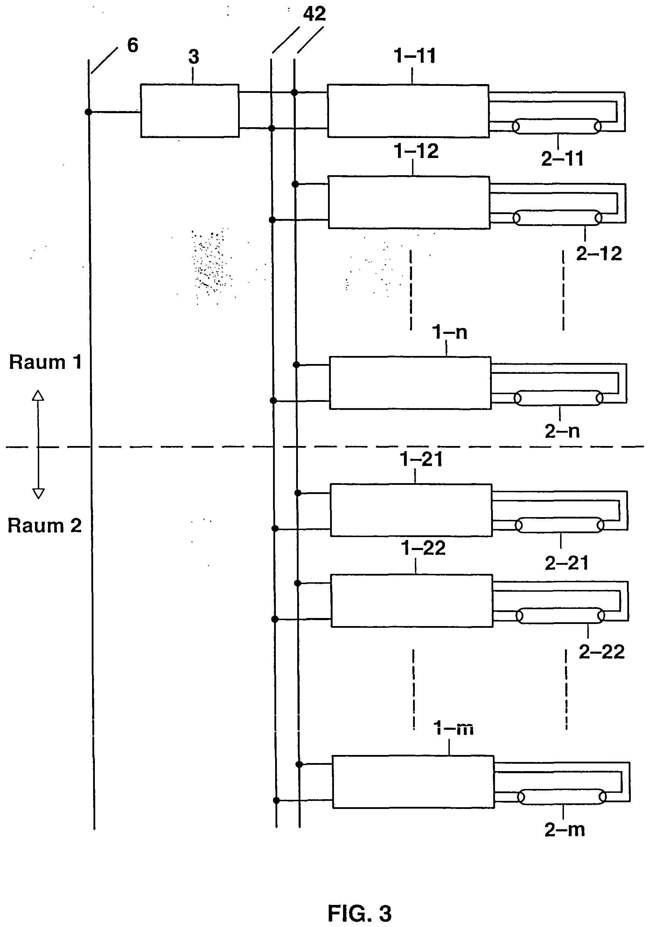

Fig. 3 zeigt eine Alternative zu Fig. 2, wobei identische Bezugsziffern entsprechende Elemente bezeichnen. Der Unterschied zu der Ausführungsform aus Fig. 2 besteht darin, dass hier ein Steuergerät 3 zur Eingabe von Steuerbefehlen in die Steuersignalleitung 42 verwendet wird, das seinerseits Befehle über ein Bussystem in Form der symbolischen Leitung 6 eines allgemeineren Gebäudetechniksteuerungssystems empfängt. Das Steuergerät 3 bezeichnet hier also die Schnittstelle bzw. das Gateway zwischen dem links davon durch die Leitung 6 dargestellten Gebäudetechniksteuerungssystem und der eigentlichen mit dem Steuergerät 3 beginnenden Lichtanlage. Die Konstruktion des Gebäudetechniksteuerungssystems und insbesondere die Befehlseingabe sind hier nicht näher dargestellt; es geht lediglich darum, zu demonstrieren, dass die erfindungsgemäße Lichtanlage in ein solches System integriert sein kann.

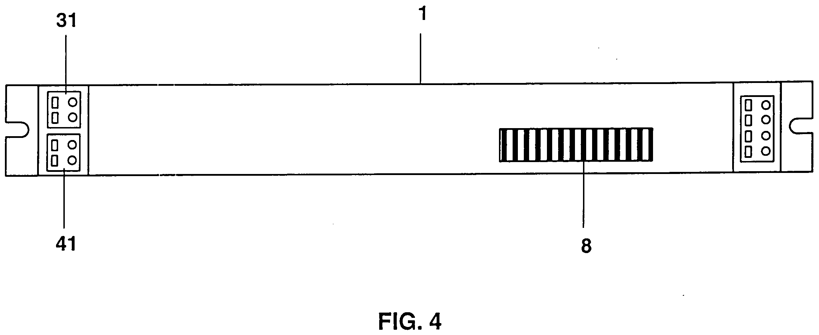

Fig. 4 zeigt ein konkretes Beispiel für ein EVG 1 gemäß den Fig. 1 - 3. Dabei ist ein quaderförmiges Blechgehäuse dargestellt, in dem die anhand Fig. 1 näher erläuterte Schaltung untergebracht ist. Links erkennt man den Netzanschluss 31 und den Steueranschluss 41; rechts sind vier Einzelanschlüsse für die Lampe 2 eingezeichnet, jedoch nicht beziffert. Das EVG 1 kann über links und rechts außen erkennbare Ausnehmungen leicht in Leuchten befestigt werden.

Insbesondere weist das EVG 1 aus Fig. 4 einen Aufdruck 8 mit einem Barcode und einer alphanumerischen Wiedergabe des entsprechenden Codes auf. Hierbei handelt es sich um die bereits in der Beschreibungseinleitung erläuterte individuelle Codierung des einzelnen EVGs, die vom Installateur bei der Installation der Lichtanlage aus Fig. 2 oder 3 oder beim Nachrüsten des EVGs 1 in eine bestehende Lichtanlage über einen Barcodeleser oder durch Abtippen erfasst werden kann. Der entsprechende Code ist in dem in Fig. 1 dargestellten Halbleiterspeicher 16a des Mikrocontrollers 16 in dem EVG abgelegt. Er spiegelt Herstellungsort, -zeit und -linie (im Werk) des EVGs wieder und kann zudem Angaben über den Gerätetyp enthalten, etwa über die Zahl der Lampenausgänge und betreibbare Lampentypen.

Der Installateur kann nun in einem entsprechend erzeugten Installationsplan auf Papier und/oder einer entsprechenden Datei (Einlesen durch einen Barcodeleser oder Eintippen beispielsweise in ein Notebook) zwischen der durch seine Installation vorgegebenen Position des einzelnen EVGs 1 in der Lichtanlage gemäß Fig. 2 oder Fig. 3 (also ob es sich dort z. B. um das EVG 1-12 zu der Entladungslampe 2-12 beispielsweise hinten rechts an der Decke des ersten Raums oder um das EVG 1-21 zu der Entladungslampe 2-21 beispielsweise an der flurseitigen Wand des zweiten Raums handelt), und den Codes 8 eine Zuordnung herstellen und diese Datenbasis dem Programmierer der Steuergeräte 3 zur Verfügung stellen. Bei der Programmierung wird nun dem oder den Steuergerät/en mitgeteilt, welcher EVG-Code 8 welcher Position entspricht. Über den EVG-Code 8 ist das entsprechende EVG 1 dann signaltechnisch ansprechbar, d. h. reagiert auf entsprechende Befehle mit der richtigen Codeeingabe oder gibt den Code auf allgemeine Anfrage an das Steuergerät aus. Das Steuergerät kann daher den jeweiligen EVGs 1 bzw. Codes 8 interne Steueradressen zuweisen (im Prinzip auch die bestehenden Codes 8 als Adressen verwenden).

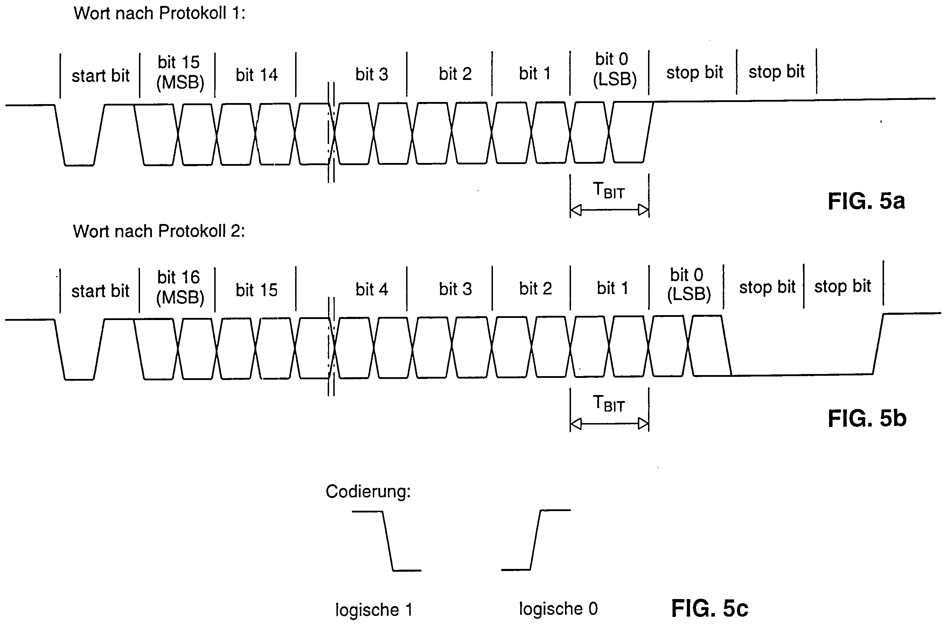

Fig. 5a und 5b zeigen schematisch den Wortaufbau (frame) von Steuerbefehlen zwischen den Steuergeräten 3 und EVGs 1 gemäß den beiden biphasencodierten Protokollen. In der Fig. 5c ist die Biphasencodierung erläutert, wobei die linke abfallende Flanke von dem hochliegenden Pegel zum niedrigen Pegel der logischen 1 und die rechte komplementäre steigende Flanke der logischen 0 entsprechen soll.

Das obere Protokoll 1 entspricht bei diesem Ausführungsbeispiel dem bereits erwähnten DALI-Protokoll und besteht aus einem Startbit (logisch 1) sowie nachfolgend 16 Informationsbits Nr. 15 - 0 sowie schließlich einem Stopbit, das einem über zwei Bitlängen (eingezeichnet als T_{BIT}) andauernden Hochpegel entspricht. MSB und LSB stehen dabei für das signifikanteste bzw. am wenigsten signifikante Bit.

Darunter ist das zweite Protokoll, nämlich ein im vorliegenden Fall OSRAMspezifisches Kommunikationsprotokoll, eingezeichnet, das im Startbit dem DALI-Protokoll 1 entspricht, jedoch eine um ein Bit verlängerte Wortlänge und ein im Pegel inverses Stopbit aufweist. Die EVGs 1 können also sowohl anhand der Wortlänge als auch anhand der Natur des Stopbits eindeutig feststellen, ob es sich um einen DALI-Befehl oder um einen OSRAMspezifischen Befehl handelt.

Damit ist es insbesondere möglich, unabhängig von dem Funktionieren und Betrieb der DALI-Kommunikation zwischen den Steuergeräten 3 und EVGs 1 herstellerspezifische Zusatz-Befehle oder Abfragen sowie Programmierungsvorgänge in den dargestellten Lichtanlagen vorzunehmen.

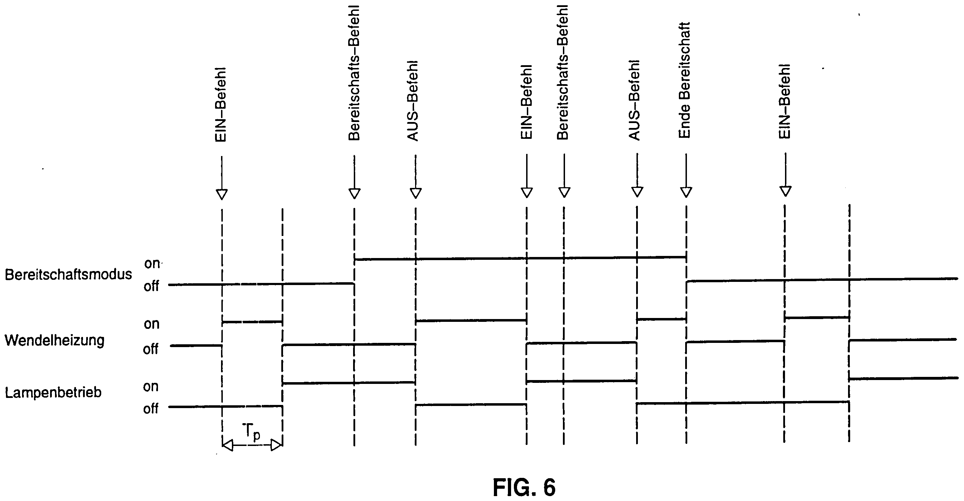

Fig. 6 schließlich zeigt eine der verschiedenen Nutzungsmöglichkeiten des zusätzlichen Kommunikationsprotokolls, nämlich mit einem herstellerspezifischen Bereitschaftsbefehl. Links sind die Bedeutungen der horizontal laufenden Diagrammlinien eingetragen, wobei ein hochliegender Pegel der Linie ein "Eingeschaltetsein" und ein tiefliegender Pegel ein "Ausgeschaltetsein" bedeutet. In dem dargestellten Diagramm beginnt der von links nach rechts laufende Zeitablauf also mit einem Ausgeschaltetsein des Bereitschaftsmodus.

Von links beginnend folgt zuerst mit einem Einbefehl ein Wendelvorheizungszustand für die Zeitdauer T_{P}, auf welche Zeitdauer eine Zündung und damit ein Lampenbetrieb (unterste waagrechte Linie im Diagramm springt auf "ein") folgt. Während des nun für eine bestimmte Zeit dauernden Lampenbetriebs erfolgt ein erfindungsgemäßer Bereitschaftsbefehl (oberste Linie springt auf "ein"), der den Lampenbetrieb an sich zunächst nicht ändert. Er hat aber zur Folge, dass der nach einer wiederum unbestimmten, jedoch nicht über einer bestimmten Maximaldauer liegende Zeit, folgende Ausbefehl zwar zum einen zu einem Ende des Lampenbetriebs, aber andererseits gleichzeitig zu einem Wiedereinschalten der Wendelheizung führt. Folgt nun nach einer bestimmten Zeit, wiederum nicht über einer bestimmten Maximalzeit, ein neuer Einbefehl, so kann die Lampe im Gegensatz zu dem ersten Einbefehl (ganz links) sofort wieder zünden, ohne eine neue Vorheizphase T_{P} abwarten zu müssen.

In dem dargestellten Beispiel folgt während des Eingeschaltetseins ein neuer Bereitschaftsbefehl, der wiederum zu einem Übergang in den Bereitschaftszustand, also in die Wendelheizung, nach dem nächsten Ausbefehl und dem gleichzeitigen Lampenbetriebsende führt. Bei diesem Beispiel soll jedoch nach einer weiteren bestimmten Zeit der Bereitschaftszustand, also die Wendelheizung, enden, weil entweder nach dem Bereitschaftsbefehl oder nach dem Ausbefehl eine über einer bestimmten vorgegebenen Maximalzeit liegende Zeitspanne abgelaufen ist oder ein Befehl zum Beenden des Bereitschaftszustands empfangen wurde. Die Wendelheizung erlischt also. Folglich muss, wie ganz rechts eingezeichnet, beim nächsten Einbefehl wieder eine Wendelvorheizung erfolgen.

Insgesamt ist die Lichtanlage damit in der Lage, durch Einschalten eines Bereitschaftszustands durch den mit dem zweiten Protokoll zur Verfügung gestellten Bereitschaftsbefehl einen sofortigen Neustart der Lampe praktisch ohne Zeitverzögerung zu ermöglichen. Dies kommt erfindungsgemäßen Lichtanlagen vor allem im Bereich der Effektbeleuchtung zu Gute.

## Patentansprüche

1. Verfahren zum Herstellen einer adressbehaftet gesteuerten Lichtanlage, welche aufweist:
- Lampen (2) zur Lichterzeugung,
- an die Lampen (2) angeschlossene Vorschaltgeräte (1) zum Betreiben der Lampen (2) sowie
- zumindest ein Steuergerät (3) zum Steuern der Vorschaltgeräte (1) und damit des Betriebs der Lampen (2),
wobei die Vorschaltgeräte (1) vor der Installation in der Lichtanlage mit für die jeweiligen Vorschaltgeräte (1) individuellen, von außen signaltechnisch ansprechbaren Codes (8) versehen sind, und wobei zur Durchführung des Verfahrens
- das Steuergerät (3) den jeweiligen Vorschaltgeräten (1) jeweilige Ansteueradressen zur Ansteuerung zuweist und
- das Steuergerät (3) die Vorschaltgeräte (1) unter Benutzung der Ansteueradressen steuert,
**dadurch gekennzeichnet, dass**
die individuellen, von außen signaltechnisch ansprechbaren Codes (8) der Vorschaltgeräte während der Installation der Lichtanlage, das heißt während der Montage der Vorschaltgeräte (1), ausgelesen werden und die von außen signaltechnisch ansprechbaren Codes (8) der Vorschaltgeräte zusammen mit den Installationspositionen der jeweiligen Vorschaltgeräte (1) dem Steuergerät (3) eingegeben werden, so dass dadurch bereits eine Zuordnung zwischen den individuellen, von außen signaltechnisch ansprechbaren Codes (8) der Vorschaltgeräte (1) und den Installationspositionen der Vorschaltgeräte (1) in der Lichtanlage existiert, wenn das Steuergerät (3) programmiert wird und die besagte Zuweisung der jeweiligen Ansteueradressen durch das Steuergerät (3) erfolgt.

2. Verfahren nach Anspruch 1, bei dem die Codes (8) der Vorschaltgeräte (1) von außen über Leitungen (42) ansprechbar sind und die Vorschaltgeräte (1) an dem Steuergerät (3) über Leitungen (42) angeschlossen sind.

3. Verfahren nach einem der vorstehenden Ansprüche, bei dem die Codes (8) optisch ablesbar auf dem Vorschaltgerät (1) angebracht sind.

4. Verfahren nach einem der vorstehenden Ansprüche, bei dem zumindest eine der Lampen (2) eine Entladungslampe und/oder LED ist.

5. Verfahren nach einem der vorstehenden Ansprüche, bei dem die Lichtanlage eine Beleuchtungsanlage insbesondere für die Innenraumbeleuchtung ist.

6. Verfahren nach einem der vorstehenden Ansprüche, bei dem das Steuergerät (3) seinerseits an ein Gebäudesteuersystem (6) angeschlossen und durch dieses gesteuert wird.

7. Verfahren nach einem der vorstehenden Ansprüche, bei dem die Lichtanlage durch Hinzufügen zumindest eines Vorschaltgeräts (1) zu einer bestehenden Lichtanlage hergestellt wird.

## Claims

1. Method for the production of a lighting system which is controlled by addresses and has
- lamps (2) for light production,
- ballasts (1) which are connected to the lamps (2) for operation of the lamps (2), and
- at least one controller (3) for controlling the ballasts (1) and thus the operation of the lamps (2),
wherein, before installation in the lighting system, the ballasts (1) are provided with codes (8) which are individual for each of the ballasts (1) and can be addressed externally by signalling, and wherein, for carrying out the method,
- the controller (3) in each case assigns drive addresses for drive purposes to each of the ballasts (1), and
- the controller (3) uses the drive addresses to control the ballasts (1),
**characterized in that**
the individual codes (8) of the ballasts which can be addressed externally by signalling are read during the installation of the lighting system, that is to say during the mounting of the ballasts (1), and the codes (8) of the ballasts which can be addressed externally by signalling are entered in the controller (3) together with the installation positions of the respective ballasts (1), such that as a result an assignment between the individual codes (8) of the ballasts (1) which can be addressed externally by signalling and the installation positions of the ballasts (1) in the lighting system already exists when the controller (3) is programmed and said assignment of the respective drive addresses is carried out by the controller (3).

2. Method according to Claim 1, in which the codes (8) of the ballasts (1) can be addressed externally via lines (42), and the ballasts (1) are connected to the controller (3) via lines (42).

3. Method according to one of the preceding claims, in which the codes (8) are applied to the ballast (1) such that they can be read optically.

4. Method according to one of the preceding claims, in which at least one of the lamps (2) is a discharge lamp and/or an LED.

5. Method according to one of the preceding claims, in which the lighting system is an illumination system, in particular for indoor lighting.

6. Method according to one of the preceding claims, in which the controller (3) is itself connected to a building control system (6) and is controlled by it.

7. Method according to one of the preceding claims, in which the lighting system is produced by addition of at least one ballast (1) to an existing lighting system.

## Revendications

1. Procédé de réalisation d'une installation d'éclairage commandée par attribution d'adresses, laquelle comporte :
- des lampes (2) pour produire de la lumière,
- des ballasts (1) connectés aux lampes (2) pour faire fonctionner celles-ci, ainsi que
- au moins un appareil de commande (3) pour commander les ballasts (1) et ainsi le fonctionnement des lampes (2),
lesquels ballasts (1), avant le montage dans l'installation d'éclairage, sont munis de codes (8) individuels adressables de l'extérieur par signal, et pour la mise en oeuvre du procédé
- l'appareil de commande (3) attribue aux ballasts respectifs (1) des adresses respectives pour effectuer la commande et
- l'appareil de commande (3) commande les ballasts (1) en utilisant lesdites adresses,
**caractérisé en ce que**
les codes (8) individuels des ballasts adressables de l'extérieur par signal, sont lus pendant le montage de l'installation d'éclairage, c'est-à-dire pendant le montage des ballasts (1), et les codes (8) des ballasts adressables de l'extérieur par signal sont entrés, conjointement avec les positions de montage des ballasts respectifs (1), dans l'appareil de commande (3), si bien qu'il existe déjà une association entre les codes (8) individuels des ballasts (1) adressables de l'extérieur par signal et les positions de montage des ballasts (1) dans l'installation d'éclairage lorsque l'appareil de commande est programmé et ladite attribution des adresses de commande respectives est effectuée par l'appareil de commande (3).

2. Procédé selon la revendication 1, dans lequel les codes (8) des ballasts (1) sont adressables de l'extérieur via des lignes (42) et les ballasts (1) sont connectés à l'appareil de commande (3) via des lignes (42).

3. Procédé selon l'une des revendications précédentes, dans lequel les codes (8) sont placés sur le ballast (1) de façon à pouvoir être lus optiquement.

4. Procédé selon l'une des revendications précédentes, dans lequel au moins une des lampes (2) est une lampe à décharge et/ou une LED.

5. Procédé selon l'une des revendications précédentes, dans lequel l'installation d'éclairage est notamment une installation pour l'éclairage intérieur.

6. Procédé selon l'une des revendications précédentes, dans lequel l'appareil de commande (3) est connecté lui-même à un système domotique (6) et est commandé par ce dernier.

7. Procédé selon l'une des revendications précédentes, dans lequel l'installation d'éclairage est réalisée en ajoutant au moins un ballast (1) à une installation d'éclairage existante.
